# EUROPÄISCHE PATENTSCHRIFT

(11) **EP 1 366 128 B1**
(45) Veröffentlichungstag und Bekanntmachung des Hinweises auf die Patenterteilung: **25.11.2009**
(21) Anmeldenummer: 02716722.0
(22) Anmeldetag: 05.02.2002
(51) Int. Cl.: C09J 133/04, C09J 123/00, C09J 151/00

(54) **HEISSVERSIEGELUNGSMASSEN**
HOT SEALING COMPOSITION
MATIERE DE SCELLEMENT A CHAUD

(30) Priorität: 07.02.2001 DE 10105818; 18.10.2001 DE 10150898
(43) Veröffentlichungstag der Anmeldung: 03.12.2003
(73) Patentinhaber: Evonik Röhm GmbH, 64293 Darmstadt (DE)
(72) Erfinder: SCHMITT, Günter, 64291 Darmstadt (DE); WICKE, Michael, 64342 Seeheim-Jugenheim (DE); HARTMANN, Jürgen, 64347 Griesheim (DE); SCHULTES, Klaus, 65197 Wiesbaden (DE); SCHWIND, Helmut, 63457 Hanau (DE); ARNOLD, Thomas, 63571 Gelnhausen-Haitz (DE)
(86) Internationale Anmeldenummer: PCT/EP2002/001143
(87) Internationale Veröffentlichungsnummer: WO 2002/068557

(56) Entgegenhaltungen:
- EP-A- 1 057 867
- US-A- 4 753 708

## Beschreibung

### Gebiet der Erfindung

Im Bereich der Verpackung von Lebensmitteln und Tabletten haben außer Polystyrol (PS) und Polyvinylchlorid (PVC) seit einiger Zeit auch Polypropylen (PP) und Polyethylenterephthalat (PET) Einzug gehalten. Unvorbehandeltes Polypropylen ist für den Lacksektor ein sehr kritischer Kunststoff, da sehr oft Haftfestigkeitsprobleme auftreten. Diese Problematik ist beim Heißversiegeln gegen Polypropylen zwar etwas anders gelagert (PP wird hier nicht beschichtet, sondern "verklebt"), aber doch ebenfalls vorhanden. So kann man die bei der Polystyrol- oder PVC-Versiegelung bewährten Polymethacrylatharze wie z. B. PLEXIGUM P 24 oder PLEXIGUM N 80 nicht einsetzen, weil Siegelnahtfestigkeit mit ihnen nicht erreichbar ist.

PLEXIGUM P24 ist ein Copolymer aus Methylmethacrylat und Butylmethacrylat und wird von der Röhm GmbH & Co. KG in den Handel gerbacht.

PLEXIGUM N80 ist ein Methylacrylat-Ethylmethacrylat-Copolymer und wird ebenfalls von der Röhm GmbH & Co. KG in den Handel gebracht.

Mit PLEXISOL PM 555 (Hersteller: Röhm GmbH & Co. KG), einem speziellen, Iösemittelhaltigen Bindemittelsystem auf Basis von Polyolefin/Polymethacrylat in Butylacetat/Methylethylketon, ist es gelungen, ein Bindemittel zu entwickeln, das für die Versiegelung von Aluminiumfolie gegen Polypropylen hervorragend geeignet ist. Darüber hinaus ist es mit PLEXISOL PM 555 aber auch möglich, ebenso gute Versieglungen gegen Polystyrol und PVC durchzuführen. PLEXISOL PM 555 muss zur Erzielung der Aluminiumhaftung mit PVC-Mischpolymerisaten wie z. B. ®VINYLITE VMCH grundiert, kann aber auch in entsprechender Kombination als Einschichtsystem eingesetzt werden.

Vinylite VMCH ist ein säurehaltiges PVC-Polymer (Vertrieb: Union Carbide).

### Stand der Technik

An die Stelle von Gefäßen und Behältern aus Holz oder aus anorganischen Werkstoffen wie Metall, Glas, Keramik sind in der Gegenwart vielfach Kunststoffprodukte getreten. Besonders hoch sind die Anforderungen in jedem Falle, wenn die Gefäße bzw. Behälter zur Aufnahme bzw. Konservierung von Lebensmitteln dienen.

Ein maßgeblicher Gesichtspunkt der Lebensmittelkonservierung, sei es durch Dehydratisierung, Gefrieren oder Sterilisieren, ist die vollständige Verhinderung mikrobiellen Wachstums. Daraus ergibt sich vielfach der Zwang, die Behälter gasdicht zu verschließen. Darüber hinaus sind bei Kunststoffbehältern die mechanische Stabilität, Kontrolle des Wassergehalts, sowie die Einwirkung der Atmosphäre und des Lichts zu berücksichtigen. (Vgl. Ullmann's Encyclopedia of Industrial Chemistry 25th Ed. Vol. A11, 523 - 560; 583 - 618 VCH 1988; dort wurden auch die geltenden Normen abgehandelt).

Zum Verschließen von Kunststoffgefäßen werden in der Lebensmitteltechnologie, insbesondere bei Molkereiprodukten wie Joghurtbechern, weithin mit einem Siegellack beschichtete Aluminiumdeckel verwendet.

Vielfach stellen derartige Aluminiumdeckel ein dreischichtiges Laminat dar, dessen äußere Schicht häufig aus (biaxial orientiertem) Polyethylenterephthalat (O-PET), biaxial orientiertem Polypropylen (OPP) oder Polyamid (O-PA) oder aus Cellulose besteht. Die heißsiegelbare, innere Schicht besteht dagegen gewöhnlich aus Polyethylen, Ethylen-Copolymerisaten oder Polypropylen (US-A 4 753 708; G. Stehle, Neue Verpackung 9/91, S. 94 -101). Gegen die Verwendung von Aluminium z. B. zur Verpackung von Lebensmitteln werden aber mehr und mehr ökonomische und ökologische Gründe in die Diskussion gebracht, insbesondere der hohe Energieaufwand bei der Herstellung des Aluminiums.

Es kommen daher auch Kunststoff-Folien anstelle von Aluminium zur Anwendung, die mit einem siegelfähigen Lack versehen sind. Der Siegellack wird dabei dem verwendeten Kunststoff angepasst. Als relativ preisgünstiges Material für siegelfähige Folien mit guter mechanischer Festigkeit und guten Barriereeigenschaften spielt Hart-PVC eine ganz erhebliche Rolle, wobei als Siegellackschicht gewöhnlich ein Acrylharz dient, dessen Haftfestigkeit und Aufschmelzpunkt durch Zusätze zweckmäßig modifiziert werden kann.

In der DE-A 35 31 036 werden durch Koextrusion herstellbare Kunststoff-Folien beschrieben, die aus einer siegelfähigen Schicht aus schlagzähem Polystyrol, einem Block-Copolymerisat und einem Gleitmittel bestehen.

In der EP-A 0 406 681 wird aber zu recht auf die Problematik bei Verwendung von heißsiegelfähigen Kunststoff-Folien anstelle von Aluminiumfolie hingewiesen. Einschränkend bemerkbar macht sich im Regelfall die wesentlich engere Verarbeitungsbreite. Überwiegend ergibt sich ein sehr enger Verarbeitungsbereich von 10 - 20 °C, der ziemlich konstant eingehalten werden muss, um eine störungsfreie Produktion und einen einwandfreien Gebrauch der versiegelten Packung zu garantieren. Bei Abfüllanlagen mit mehreren Kavitäten zum gleichzeitigen Abfüllen von Bechern ist diese Voraussetzung nicht immer erfüllt. Die EP-A 0 406 681 hatte sich zur Aufgabe gesetzt, die nach dem Koextrusionsverfahren gemäß DE-A 35 31 036 herstellbaren Folien auf Polystyrolbasis u.a. so zu verbessern, dass die Verarbeitungsbreite und die Verarbeitungssicherheit vergrößert werden.

Ferner sollte eine einwandfreie Produktion auch auf Abfüllanlagen mit mehreren Abfüllkavitäten sichergestellt werden. In der Praxis läuft dies auf die Anwendung höherer Siegeltemperaturen mit entsprechenden Anforderungen an die Qualität der Kunststoff-Folien hinaus.

Nach der EP-A 0 406 681 wurden diese Anforderungen erfüllt durch eine nach dem Koextrusionsverfahren oder durch Kaschieren hergestellte siegelfähige Kunststoff-Folie aus zwei Schichten A und C und gegebenenfalls einer Schicht B sowie gegebenenfalls je einer Schicht eines Haftvermittlers D zur Verbindung von jeweils zweien der Schichten A, gegebenenfalls B und C, bestehend aus 1 bis 50 % einer Schicht aus einem heißsiegelfähigen, schlagzähen Polystyrol A, bis zu 95 % einer Trägerschicht B und 1 bis 99 % einer hochschmelzenden Kunststoffschicht C, wobei die Summe der Stärken oder des Gewichts von A und gegebenenfalls B und C jeweils 100 ist.

Weitere Beschichtungssysteme sind u.a. auch in US-A-4 753 708 beschrieben.

### Aufgabe

Es bestand die Aufgabe, hohe Haftfestigkeit bereits bei relativ hohen Temperaturen zu erreichen, (hohe Wärmestandfestigkeit), da so kurze Zykluszeiten beim Beschichten der Folie und beim Lebensmittelverpacker erreicht werden.

Weiter bestand die Aufgabe, die bekannte Heißsiegelmasse für Aluminium- und Kunststofffolien so zu verbessern, dass anstelle des bisher üblichen lösungsmittelhaltigen Bindemittelsystems aus Butylacetat und Methylethylketon ein Lösungsmittelsystem eingesetzt werden kann, dass in der HAPS-Liste aufgelistet ist. Weiter ist anzustreben, dass bei den üblichen Taktzeiten, die bei der Heißsiegelung von Aluminium- oder Kunststofffolien angewandt werden, ausreichend hohe Festigkeiten des Verschlusses erreicht werden.

Ferner bestand die Aufgabe, eine Heißsiegelmasse zu entwickeln, die im, an den sich an das Auftragen der Heißsiegelmasse anschließenden Druckprozeß, stabil bleibt. Bindemittel des Standes der Technik können nach kurzen Druckzeiten zu Ablagerungen auf den Transportwalzen der Druckmaschine führen, so dass ein sicherer Transport der zu bedruckenden Folie nicht mehr möglich ist. Die Druckmaschine muß angehalten werden, teilweise zerlegt, und gereinigt werden. Die dafür erforderlichen Rüst- und Reinigungszeiten stehen teilweise in keinem Verhältnis zur Maschinenlaufzeit. Mit der erfindungsgemäßen Bindemittel ist ein problemloses Drucken über einen langen Zeitraum möglich.

### Lösung

Die Aufgabe wird gelöst durch eine filmbildende Dispersion gemäß Anspruch 1.

Die erfindungsgemäß zu verwendenden Olefinpolymerisate und -Copolymerisate, entsprechend A, sind an sich bekannt. Es handelt sich in erster Linie um aus Ethylen-, Propylen-, Butylen- oder /und weiteren α-Olefinen mit 5-20 C-Atomen aufgebaute Polymerisate, wie sie bereits als heißsiegelfähige Massen empfohlen worden sind. Das Molekulargewicht liegt im allgemeinen bei 10 000 bis 300 000, vorzugsweise zwischen 50 000 und 150 000. Olefincopolymerisate des anzuwenden Typs sind beispielsweise in den deutschen Offenlegungsschriften DE-OS 16 44 941, DE-OS 17 69 834, DE-OS 1939 037, DE-OS 19 63 039 und DE-OS 20 59 981 beschrieben.

Als Olefinpolymer kann beispielsweise Buna 6170 (Hersteller: Bayer AG) verwendet werden.

Besonders gut brauchbar sind Ethylen-Propylen-Copolymere; ebenfalls sind Terpolymere unter Zusatz der bekannten Terkomponenten, wie Äthyliden-Norbornen (vgl. Macromolecular Reviews, Vol. 10 1975) möglich, es ist jedoch deren Neigung zur Vernetzung beim Alterungsprozeß mit einzukalkulieren. Die Verteilung kann dabei weitgehend statistisch sein, es können aber auch mit Vorteil Sequenzpolymere mit Ethylenblöcken angewendet werden. Das Verhältnis der Monomeren Ethylen-Propylen ist dabei innerhalb gewisser Grenzen variable, die bei etwa 95 % für Ethylen und etwa 95 % für Propylen als obere Grenze angesetzt werden können.

Der Polymertyp B besteht definitionsgemäß aus Polyacrylat- und/oder Polymethacrylat-Sequenzen. Diese sind für sich genommen, z. B. in Form eines entsprechenden Homo- oder Copolymerisats. im Lösungsmittelsystem L löslich. Das Polymerisat B bzw. Segment X ist im allgemeinen zu mehr als 50 Gew.-%, vorzugsweise zu 80 bis 100 Gew.-% (z. B. wenn bezogen auf das Segment X) aufgebaut aus Monomeren der Formel I 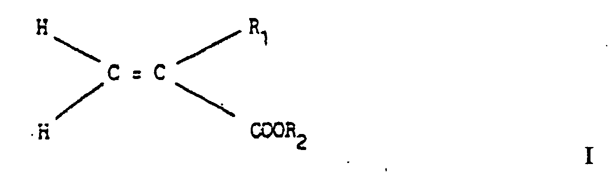 worin R₁ für Wasserstoff oder Methyl und R₂ für einen Alkylrest, einen araliphatischen oder aromatischen Rest mit 1 bis 30 Kohlenstoffatomen, vorzugsweise 1 bis 20 Kohlenstoffatomen, steht.

Im Polymer B können ferner enthalten sein:
Monomere der Formel II 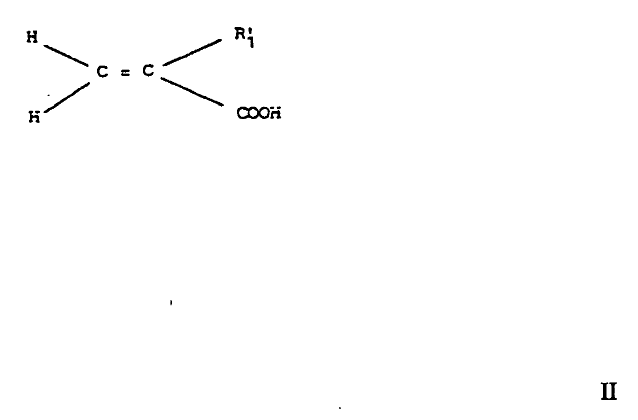 worin R'₁ für Wasserstoff oder Methyl steht oder/und polymerisationsfähige Säureanhydride und/oder Monomere der Formel III 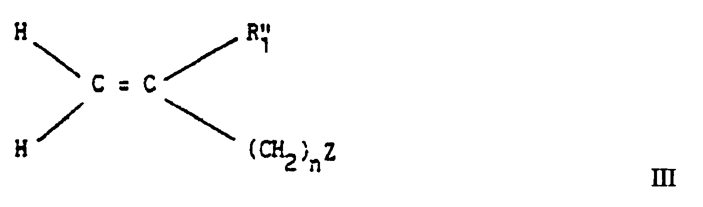 worin R"₁ Wasserstoff oder Methyl und Z einen gegebenenfalls alkylsubstituierterten Phenylrest, einen -COR₃-Rest, einen 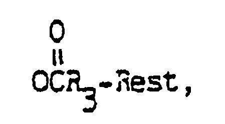 einen -OR₄-Rest oder ein Chloratom bedeutet und worin R₃ und R₄ für einen gegebenenfalls verzweigten Alkylrest mit 1 bis 20 Kohlenstoffatomen oder für einen Phenylrest und n für 0 oder 1 steht,
und/oder Monomeren der Formel IV 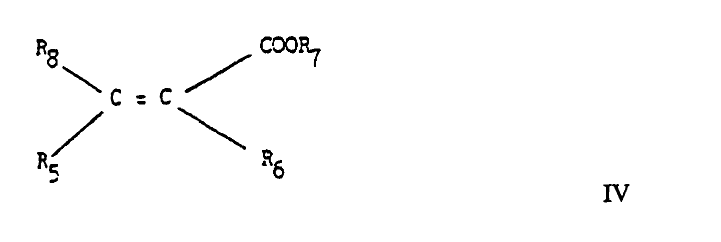 worin R₅ und R₆ Wasserstoff oder einen Rest -COOR'₇, R₆, Wasserstoff oder einen Rest --CH₂COOR"₇ bedeuten mit der Maßgabe. daß die Verbindung der Formel IV zwei carboxylhaltige Gruppen enthalten muß und worin R₇ R'₇ und R"₇ für Wasserstoff oder einen gegebenenfalls verzweigten Alkylrest mit 1 bis 20 Kohlenstoffatomen oder Phenyl stehen. Das Polymere B kann gegebenenfalls noch Anteile der Monomeren der Formel V enthalten 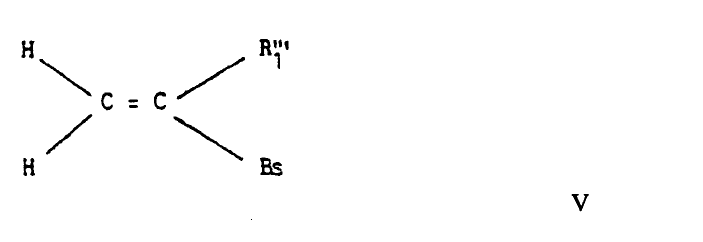 worin R"'₁ die Bedeutung von R₁ besitzt und Bs für einen stickstoffhaltigen funktionellen Rest wie eine -CN Gruppe, eine Gruppe -CONR₉R₁₀ worin R₉ und R₁₀ unabhängig voneinander für Wasserstoff oder einen Alkylrest mit 1 bis 20 Kohlenstoffatomen steht, oder worin R₉ und R₁₀ unter Einbeziehung des Stickstoffs einen heterocyclischen 5- oder 6-Ring bilden oder worin Bs für einen (inerten) heterocyclischen Rest, insbesondere einen Pyridin-, Pyrolidin-, Imidazol-, Carbazol-, Lactam-Rest bzw. alkylierte Derivate derselben steht oder Bs die Bedeutung -CH₂OH besitzt, oder worin Bs die Bedeutung

   -COO-Q-R₁₁

   besitzt, worin Q für einen, gegebenenfalls alkylsubstituierten Alkylenrest mit 2 bis 8 Kohlenstoffatomen und R_{1I}, für -OH, für -OR"'₇ oder für einen Rest -NR'₉R'₁₀ steht, wobei R"'₇, R'₉ und R'₁₀ die gleichen Bedeutungen wie R₇, R₈ und R₉ besitzen, z. B. zusammen mit dem Stickstoffatom, gegebenenfalls unter Einbeziehung eines weiteren Heteroatoms einen fünf- bis sechsgliedrigen heterocyclischen Ring bilden.

Als Beispiele für die Monomere der Formel I werden Methylmethacrylat, Ethylmethacrylat, Propylmethacrylat, Butylmethacrylat und Isobutylmethacrylat genannt. Die Monomere der Formel I werden auch als Standardmethacrylate bezeichnet.

Als Beispiele für die Monomere der Formel II werden Acrylsäure oder Methacrylsäure genannt.

Als Beispiele für Monomeren der Formeln III bzw. IV seien besonders genannt Styrol, α-Methylstyrol, Vinylchlorid, Vinylacetat, Vinyistearat, Vinylmethylketon, Vinylisobutyläther, Allylacetat, Allylchlorid, Allylisobutyiäther, Allylmethylketon, Dibutylmaleinat, Dilaurylmaleinat, Dibutylitaconat. Der Anteil der Monomeren der Formel II-V am Segment X' liegt im allgemeinen zwischen 0 und 50 Gew.-%, vorzugsweise bei 0 bis 20 Gew.-%, (bezogen auf die Monomeren des Segments X'). Der Anteil der Monomeren der Formeln II und/oder V am Segment X' wird·im allgemeinen 20Gew.-% nicht überschreiten, in der Regel liegt er bei 0 bis 10 Gew.-%, vorzugsweise 0 bis 5 Gew.-%.

Im einzelnen wird das Segment X nach Anteil und Zusammensetzung zweckmäßigerweise im Hinblick auf die gewünschte technische Funktion gewählt werden. Der Anteil der polaren Monomeren der Formeln II und V wird im allgemeinen 20 Gew.-% nicht überschreiten, vorzugsweise liegt er bei 0 bis 10 Gew.-% (bezogen auf die Monomeren des Segments X'), besonders bevorzugt bei 0 bis 5 Gew.-%. Als Monomeren der Formel V seien C- und N-Vinylpyridin sowie Vinylpyrrolidin, Vinylpyrrolidon, Vinylcarbazol, Vinylimidazol sowie deren Alkylderivate, insbesondere die N-Vinylverbindungen genannt, ebenso die Hydroxy- und Dialkylaminoalkylester der Acryl- bzw. der Methacrylsäure, speziell Dimethylaminoäthyl(meth)- acrylat. Dirnethylaminopropyl(meth)acrylat, Hydroxyäthyl(meth)acrylat. Die Segmente B und X stehen im allgemeinen im Gewichtsverhältnis 1 : 20 bis 20 : 1, vorzugsweise 1 : 4 bis 1 : 1.

Zusätzlich befindet sich im Heißsiegelsystem ein Polymerisat AX, welches ein durch B gepfropftes Polyolefin darstellt.

### Allgemein gilt :

Das Pfropfpolymerisat A-X wird in der Regel hergestellt, indem man mit Hilfe eines geeigneten Emulgators eine Dispersion aus der Komponente A herstellt und auf diese die Komponente X unter den dafür geeigneten Reaktionsbedingungen aufpfropft. Der Emulgator kann einen dem System A-X ähnlichen Aufbau besitzen. Die Verfahren zur Herstellung geeigneter Emulgatoren vom Typ A-X sind an sich bekannt. So kann z. B. nach der Methode der Übertragungspfropfung vorgegangen werden.

### Herstellung der Pfropfpolymerisate AX

### Allgemein gilt :

Das Pfropfpolymerisat A-X wird in der Regel hergestellt, indem man mit Hilfe eines geeigneten Emulgators eine Dispersion aus der Komponente A herstellt und auf diese die Komponente X unter den dafür geeigneten Reaktionsbedingungen aufpfropft. Der Emulgator kann einen dem System A-X ähnlichen Aufbau besitzen. Die Verfahren zur Herstellung geeigneter Emulgatoren vom Typ A-X sind an sich bekannt. So kann z. B. nach der Methode der Übertragungspfropfung vorgegangen werden: (Vgl. auch Houben-Weyl, Methoden der Org. Chemie, Bd. 1411, S. 114, H.A.J. Battaerd, G.W. Tregear, Polyrner Reviews, Vol. 16, Interscience (1967)).

Dazu stellt man eine 10-50 %ige, vorzugsweise 20-30 %ige Lösung eines OCP in einem geeigneten, unter Polymerisationsbedingungen inerten Lösungsmittel her, das im Normalfall einen Siedepunkt oberhalb der Verfahrenstemperatur besitzt. Als Lösungsmittel kommen z. B. Butylacetat, aliphatische cycloaliphatische und aromatische Kohlenwasserstoffe in Frage. Zu diesen OCP-Lösungen gibt man die Monomeren der Formel I bzw. eventuell die anderen Monomeren II-III in den angegebenen Verhältnissen und polymerisiert unter Zusatz eines oder mehrerer, vorzugsweise peroxidischer Radikal-Initiatoren bei 50 Temperaturen von 60-150 OC innerhalb von gewöhnlich 4-8 Stunden. Anzustreben ist ein möglichst vollständiger Umsatz. Vorzugsweise finden Perester wie tert.-Butylperoctoat Verwendung. Die Initiatorkonzentration richtet sich nach der Zahl der gewünschten Pfropfstellen und dem gewünschten Molekulargewicht des Segments X. Im allgemeinen liegt die Initiatorkonzentration zwischen 0,2 und 3 Gew.-%, bezogen auf das Polymerisat.

Gegebenenfalls können zur Einstellung des gewünschten Molekulargewichts der Segmente X noch Regler mitverwendet werden. Als Regler eignen sich z. B. Schwefelregler, insbesondere mercaptogruppenhaltige Regler, z. B. Dodecyirnercaptan. Die Konzentrationen an Reglern liegen im allgemeinen bei 0.1 bis 1,0 Gew.-%, bezogen auf das Gesamtpolymerisat. Eine weitere Methode zur Herstellung der Pfropfpolymerisate A-X stellt die Hydroperoxidation eines OCP als ersten Schritt dar. Die auf diese Weise gebildeten, kettenständigen Hydroperoxidgruppen können in einer folgenden Stufe die Pfropfpolymerisation der Vinylmonomeren initiieren. (Vgl. H.A.J. Battaerd, G.W. Tregear, Polyrner Reviews loc. cit.).

Ein Verfahren zur Herstellung von geeigneten Blockpolymerisaten besteht z. B. in der anionischen Polymerisation. Dabei kann man beispielsweise so vorgehen, daß man Isopren bzw. Butadien mit einem geeigneten anionischen Initiator (z. B. metallorganische Verbindung) polymerisiert und die "lebenden" anionischen Kettenenden mit z. B. Alkylmethacrylat bzw. Styrol umsetzt. Die so hergestellten Polymerisate werden anschließend unter Bedingungen hydriert, unter denen die vorhandenen funktionellen Gruppen nicht angegriffen werden. Bezüglich Einzelheiten der Herstellung sei auf die einschlägige Literatur verwiesen, z. B. Houben-Weyl, Methoden der Org. Chemie, 14/1, S. flOff. ; Block Copolymers, 5 D.C. Allport, W.H. Janes, Appl. Sci. Publishers Ltd., London, 1973 ; Graft Copolymers, H.A.J. Battaerd, G.W. Tregear, Polymer Reviews Vol. 16 (1967) ; Block and Graft Polymers. W,J. Burlant, A.S. Hoffmann, Reinhold Publishers Corp., New York, 1960.

Neben den Polymertypen A und B und dem Pfropfpolymer AX befindet sich noch ein Lösungsmittelsystem in dem erfindungsgemäßen Heißsiegelsystem.

Die für das Lösungsmittelsystem L zu verwendenden Lösungsmittel sind so auszuwählen, dass sie den Erfordernissen der Beschichtungstechnologie für Kunststoffe und Metalle entsprechen. Die - gegebenenfalls im Gemisch - anzuwendenden Lösungsmittel sollen inert und im ganzen unbedenklich sein, wobei der Siedepunkt 105 C bei 760 Torr nicht überschreitet.

Als Lösungsmittel kommt ein Gemisch gemäß Anspruch 4. in Frage.

Bei der Auswahl von L ist auch auf die Verträglichkeit zwischen den Polymerkomponenten A und X zu achten. Im Falle der Unverträglichkeit zwischen A und X kann L für beide Komponenten ein gleich gutes Lösungsmittel darstellen, die Dispersion bildet sich dann aufgrund der Unverträglichkeit.

Im Falle der Verträglichkeit zwischen A und X muß L so gewählt werden, daß es bei gegebener Temperatur für X ein besseres Lösungsmittelsystem als für A darstellt, die Dispersion bildet sich dann aufgrund der unterschiedlichen Lösungsqualität. Erfindungsgemäß wird als Lösungsmittel L vorzugsweise ein solches gewählt, das die Olefincopolymerisate im Temperaturbereich zwischen 40 und 150 °C auf 5 bis 300 Gew.-% anquellen läßt ("Quellungsgrad").

Der Quellungsgrad ist folgendermaßen definiert: Ein OCP-Film von 1 mm Dicke, 2 cm Länge, 0,5 cm Breite mit bekanntem Gewicht wird bei einer definierten Temperatur - im beispielhaft belegten Falle bei 90 °C - in das Lösungsmittel eingetaucht und 24 Stunden lang isotherm gelagert, mit der Pinzette der Lösung entnommen, mittels eines Filterpapiers von anhaftendem Quellungsmittel befreit und unmittelbar anschließend gewogen. Als Maß für die Quellung wird die Gewichtszunahme in Prozent, bezogen auf das Ausgangsgewicht, definiert. Die Quellungsmessung soll bei der Temperatur, bei der die konzentrierte OCP-Dispersion hergestellt werden soll, durchgeführt werden. Erfindungsgemäß soll bei dieser Temperatur die Quellung 5 bis 300 Gew.-% betragen. Voraussetzung für die Anwendbarkeit des Kriteriums ist, dass unter den vorstehend angegebenen Bedingungen die maximale Quellung des OCP erreicht wird.

Auch Gemische aus den vorstehend beschriebenen Lösungsmitteln kommen für das Trägersystem infrage. Der Anteil des Lösungsmittelsystems L an den erfindungsgemäß konzentrierten Polymerisatdispersionen kann z. B. 80, in besonders günstigem Fall bis herab zu 20 Gew.-% betragen, vorzugsweise unter 70, praktisch meist 55 bis 40 Gew.-%.

### Herstellung des Heißsiegelsystems

Mit Hilfe eines geeigneten Emulgators wird, wie vorstehend erläutert, eine Dispersion oder bei geeigneter Abstimmung der Polymerverträglichkeit eine homogene Lösung der Komponente A im Lösungsmittelsystem L hergestellt und hierauf unter geeigneten Reaktionsbedingungen die Komponente X aufgepfropft. Im allgemeinen stehen die Anteile von A und X in Gewichtsverhältnissen von 1 zu 5 bis 5 zu 1. Der Gehalt des gesamten Polymerisats bezogen auf die gesamte Dispersion beträgt mindestens 10 Gew.-%, wobei in der Praxis 40 bis 80 Gew.-% angestrebt werden, im Normalfall 45 bis 60 Gew.-%.

Nach dem erfindungsgemäßen Verfahren werden heißsiegelfähige Beschichtungsmassen in Dispersion erhalten, die eine ausreichende Stabilität für den Verarbeitungsprozeß besitzen. Die Stabilität der Dispersionen beträgt mindestens mehrere Tage, im Normalfall mehrere Wochen bis Monate.

Die erfindungsgemäßen Heißsiegelsysteme zeichnen sich durch mittlere Haftfestigkeiten und durch eine hohe Wärmezustandsfestigkeit aus.

### Beispiele

### Verwendetes Folienmaterial

Weichaluminiumfolie 40 µm

Polypropylenfolie, extrudiert aus Granulat JE 6100 (Fa. Shell) 0,2 mm

### Rezeptur der Heißsiegellösung

Vor der Verarbeitung muss PLEXISOL PM 555 gut aufgerührt werden, da bei längerer Lagerung die Möglichkeit einer Phasentrennung besteht.

PLEXISOL PM 555 hat in Lieferform (Hersteller: Röhm GmbH & Co. KG) einen Festkörpergehalt von ca. 45% und wird zur Weiterverarbeitung mit MEK auf 30 % verdünnt. Zur Haftvermittlung auf der Aluminiumfolie haben sich PVC-Mischpolymerisate bewährt. Sie werden entweder als Grundierung aufgetragen oder in Kombination mit PLEXISOL PM 555 eingesetzt. Bei unseren Untersuchungen wurden beide Möglichkeiten geprüft. Es wurde sowohl mit Vinylite VMCH grundiert als auch im Verhältnis 99/1 bis 90/10 bzw. 85/15 mit VMCH kombiniert.

### Auftrag der Heißsiegellösung im Labor

Die Grundierung wurde als 10%ige Lösung von Vinylite VMCH in Ethylacetat mit dem K-Handcoater Nr. 2 auf die Aluminiumfolie (10 x 20 cm) aufgezogen. Dies entspricht einer Trockenschicht von 0,5 -1,5 um.

Die PLEXISOL PM 555-Heißsiegellöung wurde mit dem K-Handcoater Nr. 4 aufgezogen. Dabei wurden Trockenschichtdicken von 7 - 9 µm erhalten.

### Trocknung der beschichteten Folien im Labor

Die grundierte Folie wurde nach kurzer Ablüftzeit (10 - 20 Minuten) 1 Minute bei 180°C im Umluftofen getrocknet.

Die mit Heißsiegellack beschichteten Folien wurden 1 Minute bei verschiedenen Temperaturen (160 °C, 200 °C) getrocknet, aber auch 5 Sekunden bei 205 °C, wie in der Praxis häufig üblich.

### Heißversiegelung und Ermittlung der Siegelnahtfestigkeit nach unterschiedlicher Beanspruchung

Die Versiegelungen wurden mit dem Heißsiegelgerät (HSG/ET) der Fa. Brugger durchgeführt.

### Siegelbedingungen:

| | |
|---|---|
| Temperatur: | 180 °C, 200 °C, 220 °C |
| Druck: | 6 bar |
| Zeit: | 1 sec. |
| Siegelfläche: | 10 x 10 mm |

Zur Ermittlung der Siegelnahtfestigkeit wurden Proben in 15 mm breite Streifen geschnitten und mit der Zugprüfmaschine von Instron, Modell Nr. 1195 oder Zwick, Modell Nr. 1454 bei einer Geschwindigkeit von 100 mm/min. gezogen. Es wurde darauf geachtet, dass während des Abzugsversuches die bereits voneinander getrennten Folienteile mit dem noch unbeanspruchten Rest einen Winkel von 90 °C bilden.

Die Prüfungen erfolgten im Regelfall ohne vorherige Beanspruchung der gesiegelten Proben, wurden zusätzlich aber auch nach 28tägiger Lagerung in Leitungswasser bei 23 °C und 1 Stunde Wasserlagerung bei + 80 °C durchgeführt.

Die Ermittlung der Platzdruckfestigkeit der mit der erfindungsgemäßen Masse gesiegelten Folien erfolgte in Anlehnung an das Merkblatt für die Prüfung von Packmitteln Nr. 41, veröffentlicht als technisch-wissenschaftliche Beilage zu "Verpackungs-Rundschau", 32 (1981), Nr. 8, S. 58.

Die Versiegelungen der PP-Becher erfolgte mit einem Labor-Becherversieglungsgerät VL-1600 der Firma BHS.

### Heißversiegelung und Ermittlung der Platzdruckfestigkeit nach unterschiedlicher Beanspruchung

Die Versiegelungen wurden mit dem Labor-Becherversieglungsgerät VL-1600 der Fa. BHS durchgeführt. Hierfür wurden Becher der Fa. Knauer mit der Bezeichnung Uniplast E 30 und einem äußeren Durchmesser von 7,5 cm eingesetzt.

### Siegelbedingung:

| | |
|---|---|
| Temperatur: | 180 °C, 200 °C, 220 °C |
| Druck: | 0,75 bar (entspr. 1400 N Gesamtdruck des Siegelwerkes) |
| Zeit: | 0,65 sec. |

Aus der Folie wurden Deckelproben mit 7,5 cm Durchmesser gestanzt (Stanzgerät-Eigenbau) und auf den bis ca. 1 cm unter dem Rand mit ca. 70 °C warmen Wasser gefüllten Becher gelegt und versiegelt. Die Ermittlung der Platzdruckfestigkeit erfolgte nach 4 verschiedenen Beanspruchungen:
a) sofort nach der Versiegelung
b) nach 30 min. Abkühlung bei Raumtemperatur
c) nach 28 Tagen Lagerung des mit der Siegelfläche nach unten liegenden Bechers
d) nach einer Stunde Wasserlagerung bei 80 °C und 30 min. Abkühlung bei Raumtemperatur

Die Platzdruckfestigkeitsmessung sofort nach der Versielung ist en Maß für die Wärmestandfestigkeit. Die Messung nach Abkühlung dient zur Feststellung der Grundfestigkeit im Gebrauchszustand bzw. Ausgangswert für die Beständigkeitsmessungen.

### Ergebnisse der Versuche

### siehe Tabelle

### Vergleich der Lösungsmittelsysteme

### Heißsiegeleigenschaften

| Bezeichnung | Polymerisat | Lösungsmittel | HSF [N/15mm] | | Platzdruckfestigkeit [bar] | |
|---|---|---|---|---|---|---|
| | | | Alu gegen PP | | 70° C H₂O | |
| | | | normal | 48h H₂O | sofort | n. 30' |
| Beispiel 1 | Buna 6170 - n-BMA - MMA | Propylacetat - iso-Octan - Ethylacetat | 9,1 | 8,9 | 0,62 | 0,82 |
| Beispiel 2 | dito | dito | 9,3 | 9,7 | 0,63 | 0,68 |
| Beispiel 3 | dito | dito | 8,8 | 9,5 | 0,67 | 0,90 |
| Vergleich 1 | Buna 6170 - n-BMA - MMA | Butylacetat - Methylethylketon | 9,5 | 8,9 | 0,50 | 0,54 |
| Vergleich 2 | dito | dito | 10,2 | 10,4 | 0,50 | 0,59 |

Trocknungsbedingungen: je 1' 180°C
Siegelbedingungen: 6 bar, 200°C, 1" (HSF); 0,75 bar, 200°C, 0,65" (Platzdruck); alle Folien werden mit Vinylite VMCH grundiert.

| Zusammensetzung des Polymerisats: | Zusammensetzung des Lösungsmittels: |
|---|---|
| Bund 6170: 54 Gew.-% | Propylacetat: 54 Gew.-% |
| n-Butylmethacrylat: 23 Gew.-% | Iso-Octan: 9,5 Gew.-% |
| Methylmethacrylat: 23 Gew.-% | Ethylacetat: 36,5 Gew.-% |
| | |
| 43 %ig im Lösungsmittel | |

## Patentansprüche

1. Heißsiegelfähiges, zur Versieglung verschiedenartiger Untergründe geeignetes Beschichtungssystem, bestehend aus
- einer filmbildenden Dispersion mindestens zweier verschiedener Polymertypen A und B und einem Polymer AB, welches ein durch ein (Meth)acrylatcopolymer B gepfropftes Polyolefin A darstellt und
- einem organischen Lösungsmittelsystem,
**dadurch gekennzeichnet, dass**
der Polymertyp A ein Olefinpolymer oder ein Olefincopolymer ist, der Polymertyp B ein (Meth)acrylatcopolymer ist,
enthaltend Standardmethacrylate und in Summe bis zu 15 % Methacrylsäure und/oder Acrylsäure und/oder eine andere polymerisierbare Säure,
und die beiden Polymertypen im Gewichtsverhältnis von A: B von 0,4 bis 2 vorliegen, und dass das organische Lösungsmittelsystem aus den Komponenten, Ethylacetat - Iso-Octan - Propylacetat besteht, wobei das Gewichtsverhältnis der Ester der aliphatischen Carbonsäuren zu den aliphatischen Kohlenwasserstoffen zwischen 1 und 200 besteht und dass der Siedepunkt des Lösungsmittelsystems unter Normalbedingungen maximal 105° C beträgt.

2. Verfahren zur Versiegelung heißsiegelfähiger Untergründe,
**dadurch gekennzeichnet, dass**
ein Beschichtungssystem nach dem vorstehenden Anspruch verwendet wird.

3. Verfahren nach Anspruch 2 **dadurch gekennzeichnet, dass** man eine Aluminiumfolie mit dem Beschichtungssystem beschichtet und gegen einen Kunststoff, ausgewählt aus der Gruppe der Kunststoffe Polypropylen, Polyethylen, Polystyrol, Polyester oder Polyvinylchlorid siegelt.

4. Lösungsmittelsystem zur Verwendung nach Anspruch 1,
**dadurch gekennzeichnet, dass**
es aus einem Gemisch aus Propylacetat (40 bis 70 Vol.-%), Ethylacetat (24 bis 45 Vol.-%) und iso-Octan (5 bis 15 Vol.-%) zusammengesetzt ist.

## Claims

1. Heat-sealable coating system suitable for the sealing of various types of substrate and composed
- of a film-forming dispersion made from at least two different polymer types A and B, and of a polymer AB, which is a polyolefin A grafted with a (meth)acrylate copolymer B, and
- of an organic solvent system,
**characterized in that**
the polymer type A is an olefin polymer or an olefin copolymer,
the polymer type B is a (meth)acrylate copolymer,
containing standard methacrylates and a total of up to 15% of methacrylic acid and/or acrylic acid, and/or another polymerizable acid,
and the ratio A:B by weight of the two polymer types present is from 0.4 to 2, and **in that** the organic solvent system is composed of the components ethyl acetate-isooctane-propyl acetate, where the ratio by weight of the esters of the aliphatic carboxylic acids to the aliphatic hydrocarbons is from 1 to 200, and **in that** the boiling point of the solvent system under standard conditions is not more than 105°C.

2. Process for the sealing of heat-sealable substrates,
**characterized in that**
use is made of a coating system according to the preceding claim.

3. Process according to Claim 2, **characterized in that** the coating system is used to coat an aluminum foil, which is sealed to a plastic selected from the group of the following plastics: polypropylene, polyethylene, polystyrene, polyester or polyvinylchloride.

4. Solvent system for use according to Claim 1,
**characterized in that**
it is composed of a mixture of propyl acetate (from 40 to 70% by volume), ethyl acetate (from 24 to 45% by volume), and isooctane (from 5 to 15% by volume).

## Revendications

1. Système de revêtement thermosoudable, approprié au soudage de supports de natures différentes, constitué
- d'une dispersion filmogène d'au moins deux différents types de polymères A et B et d'un polymère AB qui représente une polyoléfine A greffée avec un copolymère de (méth)acrylate B et
- d'un système de solvant organique,
**caractérisé en ce que**
le type de polymère A est un polymère d'oléfine ou un copolymère d'oléfine,
le type de polymère B est un copolymère de (méth)acrylate,
contenant des méthacrylates standard et au total jusqu'à 15 % d'acide méthacrylique et/ou d'acide acrylique et/ou d'un autre acide polymérisable,
et les deux types de polymères sont présents en un rapport pondéral A:B de 0,4 à 2, et **en ce que** le système de solvant organique consiste en les composants acétate d'éthyle - iso-octane - acétate de propyle, le rapport pondéral des esters des acides carboxyliques aliphatiques aux hydrocarbures aliphatiques étant compris entre 1 et 200, et **en ce que** le point d'ébullition du système de solvant dans les conditions normales est au maximum de 105 °C.

2. Procédé pour le soudage de supports thermosoudables, **caractérisé en ce qu'**on utilise un système de revêtement selon la revendication précédente.

3. Procédé selon la revendication 2, **caractérisée en ce qu'**on revêt une feuille d'aluminium avec le système de revêtement et on la soude contre une matière plastique choisie dans le groupe des matières plastiques polypropylène, polyéthylène, polystyrène, polyester ou poly(chlorure de vinyle).

4. Système de solvant pour utilisation selon la revendication 1, **caractérisé en ce qu'**il est composé d'un mélange d'acétate de propyle (40 à 70 % en volume), d'acétate d'éthyle (24 à 45 % en volume) et d'iso-octane (5 à 15 % en volume).
